Europäisches Patentamt

European Patent Office

Office européen des brevets

(19)

(11) Veröffentlichungsnummer: **0 053 124 B1**

(12) # EUROPÄISCHE PATENTSCHRIFT

(45) Veröffentlichungstag der Patentschrift:
18.07.84

(21) Anmeldenummer: 81901313.7

(22) Anmeldetag: 29.05.81

(86) Internationale Anmeldenummer:
**PCT/DE 81/00079**

(87) Internationale Veröffentlichungsnummer:
**WO 81/03508 (10.12.81 Gazette 81/29)**

(51) Int. Cl.³: **D 21 H 5/10, B 41 M 3/14,
G 06 K 19/00, G 07 D 7/00**

(54) WERTPAPIER MIT ECHTHEITSMERKMALEN IN FORM VON LUMINESZIERENDEN SUBSTANZEN.

(30) Priorität: 30.05.80 DE 3020652

(43) Veröffentlichungstag der Anmeldung:
09.06.82 Patentblatt 82/23

(45) Bekanntmachung des Hinweises auf die Patenterteilung:
18.07.84 Patentblatt 84/29

(84) Benannte Vertragsstaaten:
FR LU NL

(56) Entgegenhaltungen:
DE - A - 667 012

(73) Patentinhaber: GAO GESELLSCHAFT FÜR AUTOMATION UND ORGANISATION MBH, Euckenstrasse 12, D-8000 München 70 (DE)

(72) Erfinder: KAULE, Wittich, Germeringer Strasse 50, D-8035 Gauting (DE)
Erfinder: SCHWENK, Gerhard, Edelweissstrasse 20, D-8031 Puchheim (DE)
Erfinder: STENZEL, Gerhard, Schlessstättstrasse 6, D-8000 München 2 (DE)

(74) Vertreter: Kador . Klunker . Schmitt-Nilson . Hirsch, Corneliusstrasse 15, D-8000 München 5 (DE)

BUNDESDRUCKEREI BERLIN

## Beschreibung

Die Erfindung bezieht sich auf ein Wertpapier mit Echtheitsmerkmalen in Form von lumineszierenden Substanzen und ein Verfahren zur Herstellung derselben.

Unter der Bezeichnung »Wertpapier« werden hier Banknoten, Scheckformulare, Aktien und Briefmarken sowie Ausweise, Kreditkarten, Scheckkarten, Pässe, Flugscheine und andere Urkunden und Dokumente verstanden.

Die Absicherung von Wertpapieren gegen Fälschung mittels lumineszierender Substanzen ist schon seit langem bekannt. Bereits in der DE-C-449 133 aus dem Jahre 1925 und der DE-C-497 037 aus dem Jahre 1926 wird das Einbringen von lumineszierenden Substanzen in Wertpapiere beschrieben, wobei die dabei verwandten Luminophore mit ultravioletten oder anderen unsichtbaren Strahlen anregbar sind und im sichtbaren Bereich emittieren.

In den US-A-3 473 027 und 3 525 698 sind Luminophore und deren Verwendung als Codierfarben auf der Basis von mit Seltenerdmetallen dotierten Wirtsgittern, die gegebenenfalls coaktiviert sind, beschrieben, bei denen die Anregung im UV-Bereich bzw. im kurzwelligen sichtbaren Bereich und die Emission im sichtbaren und auch im daran angrenzenden IR-Bereich erfolgen, wobei die Emissionen im IR-Bereich zur Erweiterung des verwendbaren Spektralbereichs herangezogen werden.

Die in der DE-A-2 547 768 beschriebenen Seltenerdmetall-Luminophore werden im IR-Bereich angeregt und emittieren im sichtbaren Bereich.

Die Verwendung von Luminophoren zur Absicherung von Wertpapieren wird ferner in der DE-A-1 599 011 beschrieben.

Der Stand der Technik bezüglich der Absicherung von Wertpapieren mit lumineszierenden Substanzen läßt sich dahingehend zusammenfassen, daß solche Luminophore ausgewählt wurden, die verfügbar waren, deren unveränderte Anregungs- und Emissionsspektren im Hinblick auf die Absicherung und Echtheitsprüfung als günstig erscheinen.

In der Patentliteratur werden ferner zahlreiche Vorschläge für die Modifizierung von Luminophoren, beispielsweise durch Kombination derselben mit anderen Substanzen oder deren Beschichtung und Umhüllung, für die verschiedensten Zwecke einschließlich der Änderung der Spektralbereiche gemacht.

So wird beispielsweise vorgeschlagen, die chemische Beständigkeit von Luminophoren durch Ummantelung mit bestimmten Substanzen zu verbessern. Bei Leuchtschirmen wird zur mehrfarbigen Darstellung von Bildern ein Teil der Leuchtstoffe mit einer Sperrschicht ummantelt. Bei der Herstellung von Hochkontrastkathodenstrahlröhren für Farbfernsehempfänger ist es bekannt, die Leuchtstoffe mit Pigmenten zu beschichten.

Zur Verbesserung des Bildes von Bildschirmröhren für Farbfernsehempfänger ist es ferner bekannt, unerwünschte Emissionen der Leuchtstoffe durch Pigmentummantelung zu unterdrükken. Diesbezüglich kann beispielsweise auf die DE-A-2 754 369 und die US-A-4 152 483 hingewiesen werden.

Es ist auch bekannt, beispielsweise aus der GB-A-1 484 471, den Anregungsbereich eines Luminophors durch Kombination mit einem zweiten Luminophor zu erweitern.

In der DE-A-2 102 120 ist die Ummantelung von Luminophoren mit dielektrischen Vielfachbeschichtungen beschrieben, um einen Teil der Emission zu unterdrücken und gleichzeitig die Intensität anderer Emissionen zu erhöhen.

In der DE-A-1 599 011 wurde bereits vorgeschlagen, Luminophore, die zur Absicherung von Identifizierungskarten und dergleichen verwendet werden, mit einer Folie abzudecken, um auf diese Weise zu vermeiden, daß die Absicherung mit bloßem Auge erkannt werden kann.

Auch ist es aus der GB-A-1 186 253 bekannt, Aufzeichnungen mit lumineszierenden Substanzen teilweise mit für Emissionsstrahlung undurchlässigen Farbstoffen zu überdecken, um damit bestimmte Zeichen, wie Buchstaben, darstellen zu können.

Luminophore mit charakteristischen Eigenschaften, die sich zur Absicherung von Wertpapieren für eine automatisierte Echtheitserkennung eignen, sind jedoch in ihrer Zahl beschränkt. Dies trifft insbesondere auf die Seltenerdmetall-Luminophore zu, die zur Absicherung von Wertpapieren bevorzugt eingesetzt werden. Die meisten anderen anorganischen und organischen Luminophore haben uncharakteristische, breite Spektren und sind überdies oft handelsüblich.

Solche breiten Anregungs- und Emissionsspektren führen, worauf beispielsweise in der US-A-3 473 027 hingewiesen wird, ferner dazu, daß die gleichzeitige Verwendung von mehr als einem einzigen breitbandigen Luminophor nicht praktikabel ist.

Es werden zwar im Stand der Technik, worauf vorstehend eingegangen wurde, verschiedene Maßnahmen zur Abänderung des Spektrums von Luminophoren vorgeschlagen, diese Vorschläge dienen jedoch nicht zur Verbesserung der automatischen Erkennbarkeit oder automatischen Unterscheidbarkeit aufgrund der Lumineszenzeigenschaften, sondern beispielsweise zur Unterdrückung der Lumineszenzeigenschaften überhaupt, zur Änderung der Farbeigenschaften, wie bei der Modifizierung vom Luminophoren für Bildschirmröhren, oder anderen Zwecken.

Schließlich ist es aus der DE-C-667 012 bekannt, Wertpapiere mit Echtheitsmerkmalen in Form von lumineszierenden Substanzen abzusichern, wobei die lumineszierenden Substanzen aus einem Luminophor und absorbierenden Substanzen bestehen.

Der Erfindung liegt die Aufgabe zugrunde, die Anzahl von Luminophoren, die sich als Echtheitsmerkmale für Wertpapiere eignen, zu erhöhen, und insbesondere Wertpapiere mit Echtheitsmerkmalen in Form von lumineszierenden Substanzen zu schaffen, die sich gegenüber Wertpapieren mit bekannten Luminophoren durch ein charakteristisch abgeändertes Anregungs- und/oder Emissionsspektrum auszeichnen.

Der Erfindung liegt die Erkenntnis zugrunde, daß diese Aufgabe dadurch gelöst werden kann, daß durch Kombination der lumineszierenden Substanzen mit geeigneten absorbierenden Stoffen das Anregungs- und/oder Emissionsspektrum in charakteristischer Weise geändert wird.

Gegenstand der Erfindung ist ein Wertpapier mit Echtheitsmerkmalen in Form von lumineszierenden Substanzen, bestehend aus einem Luminophor und einem oder mehreren absorbierenden Substanzen, das dadurch gekennzeichnet ist, daß das Absorptionsspektrum der absorbierenden Substanzen das Anregungs- und/oder das Emissionsspektrum des Luminophors teilweise überdeckt und damit in charakteristischer, meßbarer Art und Weise dämpft.

Diese Änderungen können beispielsweise durch Einengen des Spektralbereichs oder auch »Verformen« der Anregungs- und/oder Emissionsspektren erfolgen. Die Einengung geschieht dabei in einfachster Weise durch Abtrennen von Randbereichen der Spektren, während die »Verformung« z. B. durch gezielte Dämpfung schmaler Spektralbereiche breitbandiger Spektren bzw. durch Eliminieren bestimmter Spektrallinien erfolgen kann.

Die charakteristischen Unterschiede zwischen den Spektren der Luminophore und denen der erfindungsgemäß hergestellten lumineszierenden Echtheitsmerkmale sind meßtechnisch erfaßbar.

Auf diese Weise gelingt es, die Anzahl der für die automatische Echtheitserkennung geeigneten und untereinander unterscheidbaren Lumineszenzmerkmale bedeutend zu vergrößern sowie Merkmale mit charakteristischeren Spektren bereitzustellen.

Die für die Absicherung von Wertpapieren besonders geeigneten Seltenerdmetall-Luminophore haben im allgemeinen mehrere Anregungs- und Emissionsbereiche bzw. Banden oder Linien. Durch Kombination mit geeigneten absorbierenden Stoffen kann ein Teil der Anregungs- und Emissionsbereiche unterdrückt werden. Auf diese Weise läßt sich aus einem einzigen Seltenerdmetall-Luminophor eine große Anzahl unterscheidbarer Absicherungssubstanzen herstellen, die untereinander und auch von anderen ähnlichen Stoffen eindeutig unterscheidbar sind.

Aus breitbandigen Luminophoren, die für die Absicherung von Wertpapieren an sich ungeeignet sind, sei es weil die Spektren zu uncharakteristisch sind oder weil die Stoffe handelsüblich sind, lassen sich durch Kombination mit absorbierenden Stoffen Merkmalsstoffe herstellen, die charakteristische und von handelsüblichen Stoffen unterscheidbare Spektren aufweisen.

Bei der automatischen Echtheitserkennung von Wertpapieren stellt es einen zusätzlichen Sicherheitsfaktor dar, wenn die Absicherung im sichtbaren Spektralbereich keine Emissionen zeigt und damit »nicht-sichtbar« ist. Bei Luminophoren, die eine solche unerwünschte Emission im sichtbaren Bereich zeigen, läßt sich erfindungsgemäß die sichtbare Lumineszenz beseitigen, indem der Luminophor mit einem absorbierenden Stoff kombiniert wird, der zumindest im Bereich der sichtbaren Emission des Luminophors absorbiert.

Selbst die Ermittlung eines in einem Wertpapier als Echtheitsmerkmal vorliegenden Luminophors wäre bei den erfindungsgemäßen Wertpapieren noch nicht zielführend, da der reine Luminophor andere Spektren zeigt als die Kombination von Luminophor und absorbierenden Stoffen im Wertpapier.

Bei den erfindungsgemäßen Wertpapieren besteht die Absicherung aus einer lumineszierenden und einer absorbierenden Komponente.

Die lumineszierende Komponente kann ein bekannter, für die Wertpapierabsicherung geeigneter Luminophor, aber auch ein handelsüblicher und deshalb an sich nicht für die Wertpapierabsicherung geeigneter Luminophor sein. Anregung und Emission der Luminophore können im sichtbaren Bereich liegen. Vorzugsweise finden Merkmale Verwendung, deren Emission im nichtsichtbaren Spektralbereich angesiedelt ist.

Als absorbierende Komponente kommen insbesondere Farbstoffe, Farbzusätze, wie IR- oder UV-Absorber, und andere absorbierende Substanzen, die bei der Wertpapierherstellung ohne Schwierigkeiten eingesetzt werden können, in Betracht.

Beide Komponenten können organische oder anorganische Substanzen sein, die in gelöster Form oder als unlösliches Pulver eingesetzt werden können.

Das Unterdrücken von nicht erwünschten Emissionen, insbesondere im sichtbaren Bereich, kann durch Verwendung von absorbierenden Substanzen erfolgen, die in jenen Wellenlängenbereichen absorbieren, bei denen der Luminophor eine unerwünschte Emission aufweist. Für diesen Zweck eignen sich insbesondere Farbstoffe und Farbpigmente. Vorzugsweise werden die Luminophore mit den absorbierenden Substanzen ummantelt.

Insbesondere werden bei den erfindungsgemäßen Wertpapieren solche Luminophore eingesetzt, die lösungsmittelecht sind und allen bezüglich Banknotenfarben vorgeschriebenen Beständigkeitsprüfungen entsprechen. Bei weniger hohen Ansprüchen an die Beständigkeit können aber natürlich auch andere Stoffe, die nicht alle diese bei der Banknotenherstellung üblichen Anforderungen erfüllen, verwendet werden.

Die Luminophore können beispielsweise mit den absorbierenden Substanzen ummantelt der Druckfarbe zugegeben werden. Alternativ kann der Luminophor in Mischung mit der absorbierenden Substanz der Druckfarbe zugesetzt werden oder in das Papier eingebracht oder auf eine Sicherheitsfadenfolie aufgebracht werden. Der absorbierende Stoff kann gegebenenfalls in einem Firnis gelöst vorliegen. Ferner kommt es in Betracht, das Druckbild, das mit einer den Luminophor enthaltenden Druckfarbe hergestellt wurde, mit der absorbierenden Substanz zu überdecken, z. B. durch einen zweiten Druckvorgang.

Die Erfindung wird nachstehend anhand von Beispielen erläutert.

### Beispiel 1

Als lumineszierende Substanz wurde Methylenblau eingesetzt. Das Anregungsspektrum dieses Farbstoffes ist verhältnismäßig uncharakteristisch.

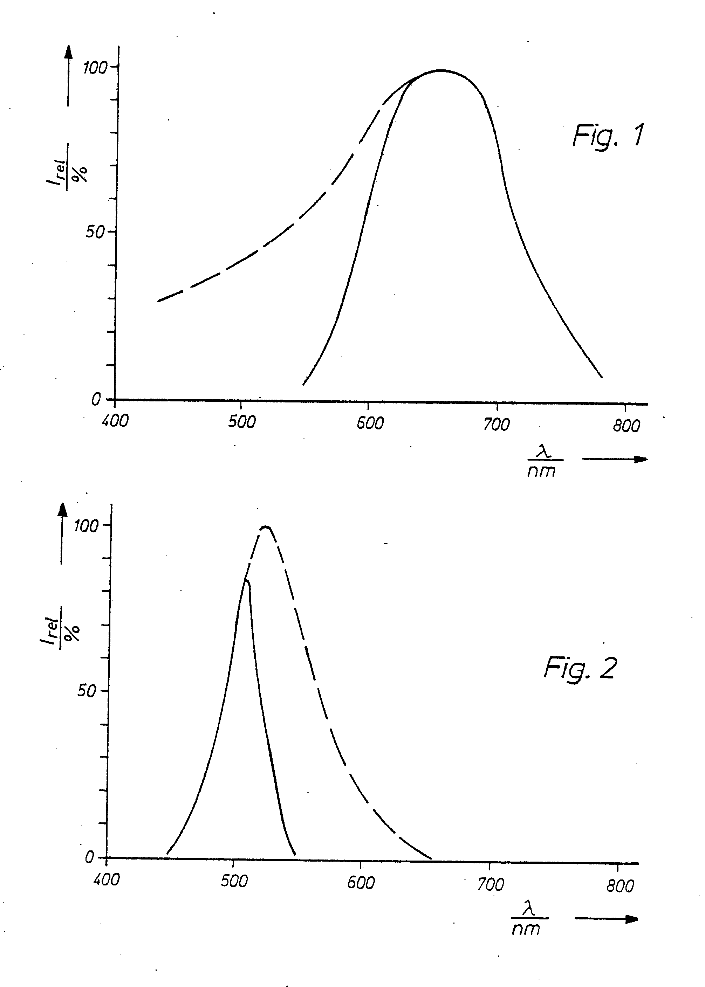

In Fig. 1 ist das Anregungsspektrum von Methylenblau durch die strichlierte Linie wiedergegeben, die ab 530 nm zu größeren Wellenlängen hin von der durchgezogenen überlagert wird.

Eine transparente Sicherheitsfolie wurde zunächst mit Methylenblau, das in einem Foliendruckfirnis dispergiert war, mit einer Schichtdicke von 20 μm beschichtet. Die so erhaltene lumineszierende Folie wurde danach mit dem Farbstoff Permanentrot ® R extra (Firma Hoechst AG), der in einem Tiefdruckfirnis dispergiert war, überdruckt. Durch dieses Überdrucken änderte sich das Anregungsspektrum in der in Fig. 1 schematisch dargestellten Weise. Das Anregungsspektrum der Kombination von Methylenblau mit Permanentrot ®R extra ist dabei als durchgezogene Linie in Fig. 1 gezeigt.

### Beispiel 2

200 g Lumilux ® CD 118 (Firma Riedel de Haen), 60 g Isophorondiisicyanat, 34 g Toluolsulfonamid 20 g Melamin und 8 g Lichtblau 2R (Firma Bayer AG) wurden in einem beheizbaren Kneter bei 140°C gemischt, wobei durch exotherme Reaktion unter Temperatursteigerung auf 200°C ein spröder Festkörper entstand. Das Produkt wurde noch weitere 30 Minuten bei 180°C auspolymerisiert und anschließend vermahlen.

Es wurde ein blaugefärbtes Pigment erhalten. Bei Anregung mit UV-Strahlung von 365 nm zeigte das Pigment ein Emissionsspektrum wie es in Fig. 2 in Form der durchgezogenen Linie wiedergegeben ist. Gegenüber dem Emissionsspektrum von Lumilux ® CD 118 (Fa. Riedel de Haën), das als strichlierte Linie in Fig. 2 wiedergegeben ist, ist das Spektrum charakteristisch abgeändert.

### Beispiel 3

Es wurde ein Pigment wie in Beispiel 2 beschrieben hergestellt, wobei jedoch 1 g des Azofarbstoffes Orange II anstelle von 8 g Lichtblau 2R eingesetzt wurde.

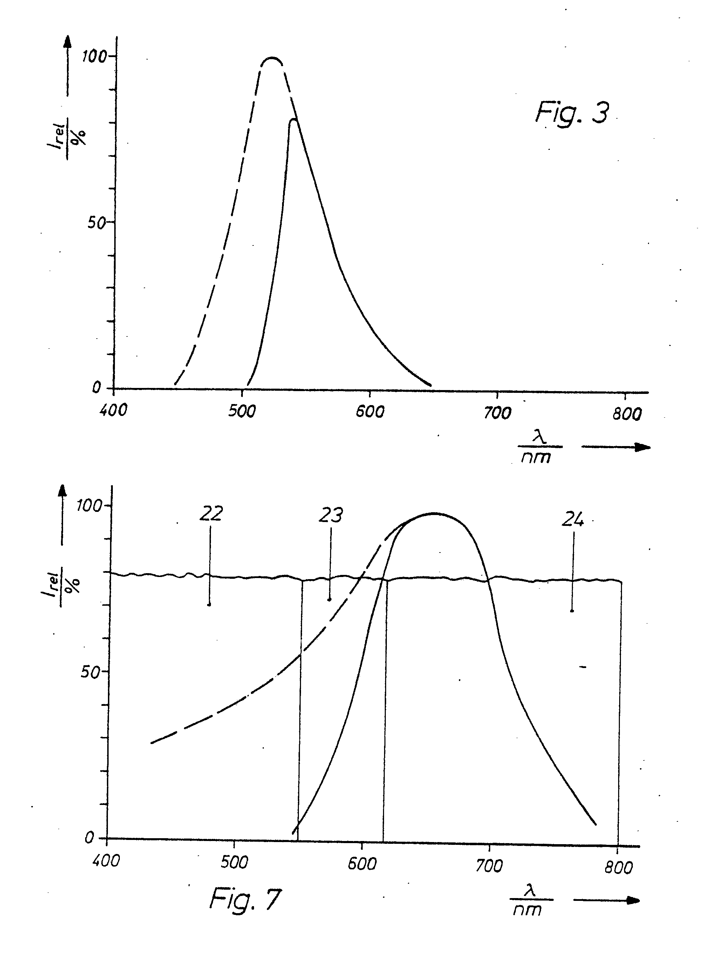

Es wurde ein orangefarbenes Pigment erhalten, dessen Emissionsspektrum bei einer Anregung mit UV-Strahlung bei 365 nm in Fig. 3 als durchgezogene Linie wiedergegeben ist und das sich von dem strichliert in Fig. 3 gezeigten Emissionsspektrum von Lumilux ® CD 118 (Fa. Riedel de Haën) charakteristisch unterscheidet.

### Beispiel 4

215 g Yttriumoxid $Y_2O_3$ wurden innig mit 19,3 g Thuliumoxid $Tm_2O_3$ und 234 g Ammoniummetavanadat $NH_4VO_3$ gemischt und die erhaltene Mischung an Luft 2 Stunden auf 800°C erhitzt. Das erhaltene Thulium-aktivierte-Yttriumvanadat hatte die Zusammensetzung $Y_{0,95}Tm_{0,05}VO_4$. Das Produkt wurde auf eine Teilchengröße von 2 μm gemahlen.

Bei Anregung mit UV-Strahlung von 310 nm zeigte der Luminophor starke schmalbandige Emissionen bei 480 nm und 800 nm.

Dieser Luminophor wurde gemäß Beispiel 2 gemeinsam mit dem Farbstoff Permanentrot ® R extra (Firma Hoechst AG) in ein Kunstharz eingebettet.

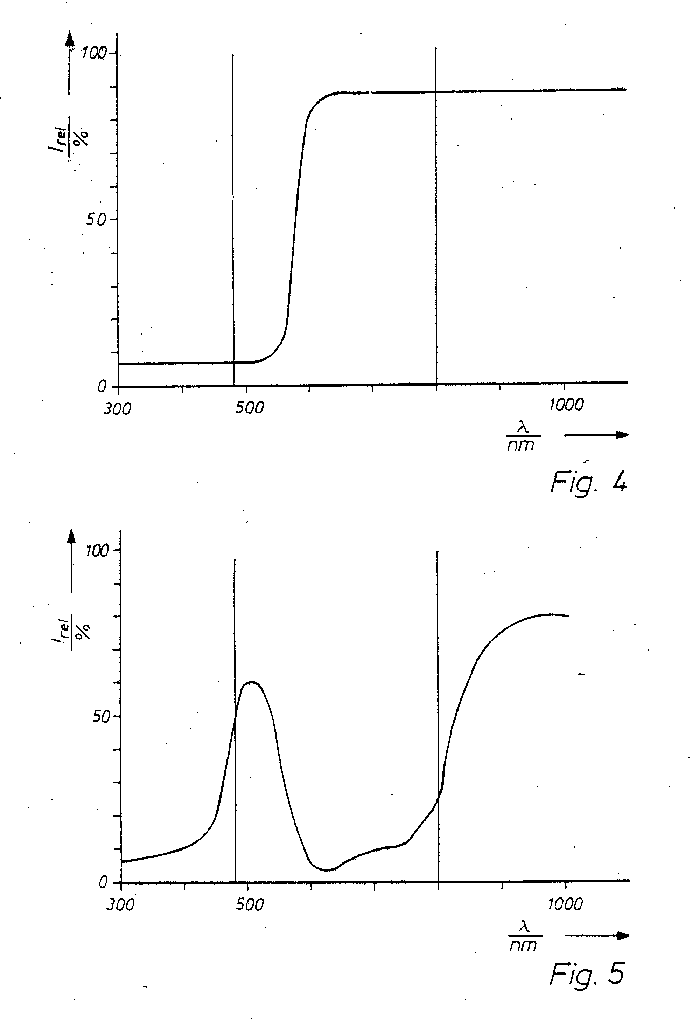

In Fig. 4 ist das Remissionsspektrum des Farbstoffes Permanentrot ® R extra wiedergegeben. Es sind auch die schmalbandigen Emissionen des Luminophors eingezeichnet. Durch die Kombination von Luminophor und Farbstoff wird die Emission bei 480 nm unterdrückt und es ist lediglich die Emission bei 800 nm beobachtbar.

### Beispiel 5

Es wurde gemäß Beispiel 4 gearbeitet, wobei jedoch anstelle des Farbstoffes Permanentrot ® R extra der Farbstoff Hostapermgrün ® 8G (Firma Hoechst AG) eingesetzt wurde.

In Fig. 5 ist das Remissionsspektrum von Hostapermgrün ® 8G wiedergegeben sowie die Emissionslinien des Luminophors $Y_{0,95}Tm_{0,05}VO_4$ (Thulium-aktiviertes-Yttriumvanadat). Durch die Kombination des Luminophors mit dem Farbstoff wird die Emission bei 800 nm unterdrückt und lediglich die Emission bei 480 nm ist beobachtbar.

Durch Vergleich der Fig. 4 und 5 ist ferner ersichtlich, daß aus dem verwendeten Luminophor durch Kombination mit geeigneten Farbstoffen zwei bezüglich ihrer Emissionsspektren charakteristisch unterschiedliche Luminophore bereitgestellt werden können.

## Beispiel 6

94 g Calciumcabonat $CaCO_3$ und 5,8 g Thuliumoxid $Tm_2O_3$ wurden in Salzsäure HCl gelöst. Mit Natronlauge NaOH wurde auf einen pH-Wert von 10 eingestellt und mit einer wäßrigen Natriumwolframatlösung gefällt. Das erhaltene Mischwolframat wurde mit 120 g Natriumwolframat $Na_2WO_4$ abgemischt, in einen Tiegel aus Aluminiumoxid überführt und 4 Stunden bei 1100° C geglüht.

Nach dem Abkühlen wurde das Flußmittel mit Wasser herausgewaschen.

Es wurde ein weißes Pulver der Zusammensetzung $Na_{0,03}Ca_{0,94}Tm_{0,03}WO_4$ mit einer mittleren Korngröße von 2 µm erhalten.

Dieses thuliumaktivierte Calciumwolframat weist bei Anregung mit UV-Licht eine blaue Lumineszenz bei 480 nm sowie Lumineszenzen im IR bei 800 und 1700 nm auf.

Die Lumineszenzen bei 480 und 800 nm ließen sich durch Kombination mit geeignet absorbierenden Farbstoffen, nämlich beispielsweise Miloriblau (Firma Langer, Ritterhude) unterdrükken.

Da die Lumineszenz bei 1700 nm im mittleren IR-Bereich liegt, in welchem die organischen Farbstoffe im allgemeinen durchlässig sind, lassen sich die meisten Farbstoffe und viele Pigmente zum Unterdrücken der Emissionen bei 480 und 800 nm verwenden. Die Farbstoffe und Pigmente zum Ändern des Anregungsspektrums sind entsprechend auszuwählen.

## Beispiel 7

21,4 g Yttriumoxid $Y_2O_3$, 1,7 g Europiumoxid $Eu_2O_3$ und 23,4 g Ammoniummetavanadat $NH_4VO_3$ wurden gemischt und auf eine Korngröße von 3 µm gemahlen. Die Mischung wurde anschließend in einer Platinschale 1 Stunde bei 730° C gesintert und danach auf Raumtemperatur abgekühlt. Das Produkt wurde nochmals gemahlen und wiederum 1 Stunde bei 730° C erhitzt.

Das erhaltene Europium-aktivierte-Yttriumvanadat $Y_{0,95}Eu_{0,05}VO_4$ war ein homogenes Pulver mit einer mittleren Korngröße von 2 µm.

Der Luminophor zeigt bei Anregung mit UV-Licht bei 313 nm eine Emission bei 618 nm. Die Emission bei 618 nm zeigt sich jedoch auch bei einer Anregung im Bereich von 590 bis 615 nm.

Die Pulverkörner wurden mit einem Kunstharz, das 2,4 Dihydroxybenzophenon enthielt, ummantelt. Das so hergestellte Produkt zeigte bei UV-Anregung keine Lumineszenz, jedoch bei Anregung im Bereich von 590 bis 615 nm eine Lumineszenz bei 618 nm.

## Beispiel 8

500 g des in Beispiel 4 hergestellten thuliumaktivierten Yttriumvanadates $Y_{0,95}Tm_{0,05}VO_4$ werden zusammen mit 1,8 g Cadmiumrot ® (Farbenfabrik Siegle u. Co.) in 500 ml Wasser in einer Rührwerkskugelmühle gemahlen. Zu dieser Pigment-Leuchtstoffmischung gibt man 0,6 g (Feststoffgehalt) einer Emulsion, bestehend aus 94% Äthylacrylat und 6% Acrylsäure und dann 2 g (Feststoffgehalt) einer Emulsion, bestehend aus 45% Äthylacrylat, 52% Methylmetacrylat und 3% Dimethylaminoäthylmethacrylat.

Danach wird der pH-Wert des Systems mit Essigsäure auf 4 eingestellt.

Der mit Cadmiumrot ® ummantelte Leuchtstoff wird filtriert, mit Wasser gewaschen und getrocknet.

Dieser Luminophor zeigt nur noch eine schmalbandige Emission bei 800 nm. Die blaue Fluoreszenz bei 480 nm wird total unterdrückt.

## Beispiel 9

250 g eines entsprechend Beispiel 8 hergestellten Ytterbium-aktivierten Yttriumvanadats $Y_{0,95}Yb_{0,05}VO_4$ werden zusammen mit 1,2 g Indanthrenbrillantorange ® GR (Farbwerke Hoechst) und 2,5 g Tetraäthylenglykoldimethacrylat in 300 ml Benzol in einer Rührwerkskugelmühle gemahlen. Nach dem Abfiltrieren wird das Pulver im Vakuum getrocknet und anschließend unter kräftigem Rühren in Mineralöl suspendiert. Diese Suspension wird 4 Stunden auf 110° C erhitzt, wodurch Polymerisation des Monomeren eintritt.

Das erhaltene orangrote Leuchtpigment wird abfiltriert, mit Hexan gewaschen und getrocknet. Bei UV-Anregung zeigt das so hergestellte Produkt keine Lumineszenz, jedoch bei Anregung im Bereich von 940 nm eine Lumineszenz bei 985 nm.

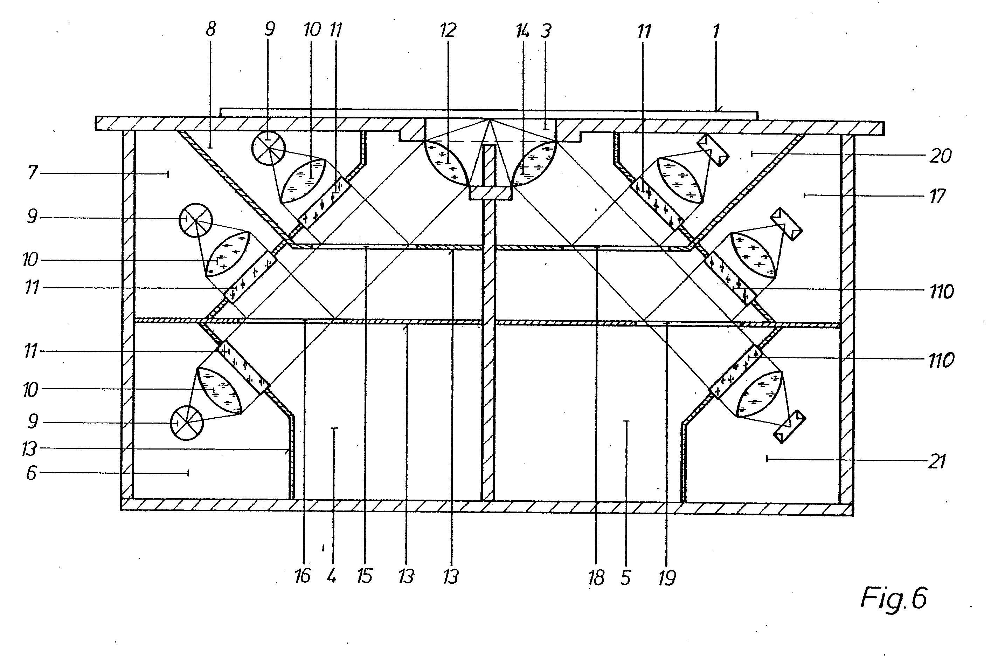

Die Prüfvorrichtung (Fig. 6) besteht aus einem Beleuchtungsteil 4 und einem Detektorteil 5. Das zu untersuchende Wertpapier 1 wird mittels einer hier nicht dargestellten Transportvorrichtung über das Fenster 3 gebracht. Aus dem Fenster fällt Anregungslicht auf das Wertpapier, welches von den Beleuchtungseinheiten 6, 7 und 8 herrührt. Diese Beleuchtungseinheiten bestehen jeweils aus einer Lampe 9, vorzugsweise eine Xenon-Blitzlampe und einer Linse 10, welche das Licht parallel durch die Interferenzfilter 11 treten läßt; diese Filter gestatten, die Anregung auf beliebige Spektralbereiche zu beschränken. Falls die charakterische Änderung nur das Emissionsspektrum betrifft, so kann man gegebenenfalls auf zwei der drei Beleuchtungseinheiten 6, 7 und 8 verzichten.

Das Anregungslicht wird über Strahlteiler 15, 16 zur Sammellinse 12 geführt und durch diese auf das Wertpapier gebündelt.

Die Zwischenwände 13 sorgen für die Unterdrückung von Streulicht.

Das Lumineszenzlicht, welches von den lumineszierenden Substanzen emittiert wird, mit denen das Wertpapier ausgestattet ist, wird durch die Sammellinse 14 parallel gerichtet und durch die Strahlteiler 18 und 19 auf die Interferenzfilter 110 gelenkt. Durch diese wird das Emissionsspektrum in mehrere, nicht überlappende, Kanäle aufgeteilt.

Ein im allgemeinen vergleichsweise schmalbandiger Kanal erfaßt gerade den durch die Kombination mit dem absorbierenden Stoff geänderten charakteristischen Teil des Emissionsspektrums; beispielsweise wird er durch die Detektoreinheit 17 gemessen. Die beiden anderen Detektoreinheiten 20 und 21 erfassen vergleichsweise breitbandig die an den charakteristischen Teil angrenzenden Spektralbereiche des Emissionsspektrums.

Aus den in Fig. 7 eingezeichneten Anregungsspektren von Methylenblau mit (durchgezogen) und ohne Ummantelung (gestrichelt) wird offenkundig, daß durch das Verhältnis der in den einzelnen Kanälen 22, 23, 24, welche den in Fig. 6 gezeigten Beleuchtungseinheiten 6, 7 und 8 entsprechen, gemessenen Werte eine erfindungsgemäß lumineszierende Substanz sicher identifizierbar ist. Selbstverständlich kann bei entsprechend hohen Ansprüchen an die Identifizierung einer erfindungsgemäßen Substanz die Anzahl der Kanäle beliebig erhöht und dabei deren spektrale Breite nahezu beliebig vermindert werden.

Auf diese Weise kann man auch sehr hohe Ansprüche an die Echtheitsprüfung erfüllen.

## Patentansprüche

1. Wertpapier mit Echtheitsmerkmalen in Form von lumineszierenden Substanzen, bestehend aus einem Luminophor und einem oder mehreren absorbierenden Substanzen, dadurch gekennzeichnet, daß das Absorptionsspektrum der absorbierenden Substanzen das Anregungs- und/oder das Emissionsspektrum des Luminophors teilweise überdeckt und damit in charakteristischer, meßbarer Art und Weise dämpft.

2. Wertpapier nach Anspruch 1, dadurch gekennzeichnet, daß der absorbierende Stoff ein Farbstoff oder ein Pigment ist.

3. Wertpapier nach Anspruch 1, dadurch gekennzeichnet, daß der absorbierende Stoff ein IR- oder ein UV-Absorber ist.

4. Wertpapier nach Anspruch 1, dadurch gekennzeichnet, daß der absorbierende Stoff eine Mischung aus einem Farbstoff oder Pigment mit einem IR- oder UV-Absorber ist.

5. Wertpapier nach einem der Ansprüche 1 bis 4, dadurch gekennzeichnet, daß der absorbierende Stoff zumindest in den Teilbereichen des sichtbaren Spektrums absorbiert, in denen der Luminophor emittiert.

6. Wertpapier nach einem der Ansprüche 1 bis 4, dadurch gekennzeichnet, daß der absorbierende Stoff im wesentlichen im gesamten sichtbaren Spektralbereich und im nahen IR absorbiert.

7. Wertpapier nach einem der Ansprüche 1 bis 6, dadurch gekennzeichnet, daß der absorbierende Stoff in jenen Spektralbereichen, in denen der Luminophor außerhalb des sichtbaren Spektralbereichs emittiert, optisch transparent ist.

8. Wertpapier nach einem der Ansprüche 1 bis 7, dadurch gekennzeichnet, daß der Luminophor auch oder nur im unsichtbaren Bereich des optischen Spektrums emittiert.

9. Wertpapier nach einem der Ansprüche 1 bis 8, dadurch gekennzeichnet, daß der Luminophor auch oder nur im IR-Bereich des optischen Spektrums emittiert.

10. Wertpapier nach einem der Ansprüche 1 bis 9, dadurch gekennzeichnet, daß der Luminophor auch oder nur im nichtsichtbaren Bereich des optischen Spektrums anregbar ist.

11. Wertpapier nach einem der Ansprüche 1 bis 10, dadurch gekennzeichnet, daß der Luminophor ein breitbandiges Emissionsspektrum besitzt.

12. Wertpapier nach einem der Ansprüche 1 bis 11, dadurch gekennzeichnet, daß der Luminophor ein Laserfarbstoff ist.

13. Wertpapier nach einem der Ansprüche 1 bis 10, dadurch gekennzeichnet, daß der Luminophor ein schmalbandiges Emissionsspektrum besitzt.

14. Wertpapier nach einem der Ansprüche 1 bis 10 oder 11, dadurch gekennzeichnet, daß der Luminophor ein Seltenerdmetall-Luminophor ist.

15. Wertpapier nach einem der Ansprüche 1 bis 14, dadurch gekennzeichnet, daß die lumineszierende Substanz eine Mischung aus dem Luminophor und dem absorbierenden Stoff ist.

16. Wertpapier nach einem der Ansprüche 1 bis 13, dadurch gekennzeichnet, daß die lumineszierende Substanz aus einem mit dem absorbierenden Stoff ummantelten Luminophor besteht.

17. Wertpapier nach einem der Ansprüche 1 bis 13, dadurch gekennzeichnet, daß die lumineszierende Substanz aus einer mit dem absorbierenden Stoff beschichteten Luminophorschicht besteht.

18. Wertpapier nach einem der Ansprüche 1 bis 17, dadurch gekennzeichnet, daß der absorbierende Stoff einen Randbereich des Anregungs- und/oder Emissionsspektrums des Luminophors durch Absorption auf vernachlässigbar kleine Werte dämpft.

19. Wertpapier nach einem der Ansprüche 1 bis 16, dadurch gekennzeichnet, daß der absorbierende Stoff einen schmalen Bereich des Anregungs- und/oder Emissionsspektrums des Luminophors durch Absorption auf vernachlässigbar kleine Werte dämpft.

20. Wertpapier nach einem der Ansprüche 1 bis 16, dadurch gekennzeichnet, daß der absorbierende Stoff einzelne Anregungs- und/oder Emissionslinien des Luminophors durch Absorption auf vernachlässigbar kleine Werte dämpft.

21. Verfahren zur Herstellung eines Wertpapiers nach einem der Ansprüche 1 bis 20, dadurch gekennzeichnet, daß die lumineszierende Substanz dem Wertpapier bereits bei der Papierpräparation zugesetzt wird.

22. Verfahren zur Herstellung eines Wertpapiers nach einem der Ansprüche 1 bis 20, dadurch gekennzeichnet, daß die lumineszierende Substanz einer Druckfarbe zugesetzt wird.

23. Verfahren zur Herstellung eines Wertpapiers nach einem der Ansprüche 1 bis 20, dadurch gekennzeichnet, daß die lumineszierende Substanz durch einen Beschichtungsprozeß aufgetragen wird.

24. Verfahren zur Herstellung eines Wertpapiers nach einem der Ansprüche 1 bis 20, dadurch gekennzeichnet, daß die lumineszierende Substanz durch entsprechend präparierte Melierfasern bei der Papierherstellung zugeführt wird.

25. Verfahren zur Herstellung eines Wertpapiers nach einem der Ansprüche 1 bis 20, dadurch gekennzeichnet, daß die lumineszierende Substanz durch einen entsprechend präparierten Sicherheitsfaden bei der Papierherstellung zugeführt wird.

26. Prüfverfahren zur Echtheitsprüfung eines Wertpapiers nach einem der Ansprüche 1 bis 25, dadurch gekennzeichnet, daß das Emissionsspektrum und/oder das Anregungsspektrum der lumineszierenden Substanz auf mehrere Kanäle aufgeteilt gemessen wird, wobei die Anzahl und die spektrale Breite der einzelnen Kanäle so gewählt ist, daß der charakteristische Teil des Spektrums mit ausreichender Sicherheit erkannt werden kann.

27. Prüfverfahren zur Echtheitsprüfung eines Wertpapiers nach Anspruch 26, dadurch gekennzeichnet, daß das Emissionsspektrum und/ oder das Anregungsspektrum der lumineszierenden Substanz auf drei Kanäle aufgeteilt gemessen wird, wobei der mittlere Kanal gerade den charakteristischen Teil des Emissionsspektrums überdeckt und die beiden anderen Kanäle die daran angrenzenden kurz- bzw. langwelligen Spektralbereiche in ausreichender Breite überdecken.

28. Prüfvorrichtung zur Durchführung des Prüfverfahrens nach Ansprüche 26 und 27, dadurch gekennzeichnet, daß sie im Detektorteil bzw. im Beleuchtungsteil Interferenzfilter (10 bzw. 110) enthält, durch welche das Emissionsspektrum bzw. das Anregungsspektrum in mehrere Kanäle aufgeteilt wird.

## Claims

1. A security paper with authenticity features in the form of luminescent substances, comprising a luminophore and one or more absorbing substances, characterized in that the absorption spectrum of the absorbing substances partially overlaps the excitation and/or the emission spectrum of the luminophore, thus damping it in a characteristic, measurable manner.

2. A security paper as in claim 1, characterized in that the absorbing substance is a dye or a pigment.

3. A security paper as in claim 1, characterized in that the absorbing substance is an IR or a UV absorber.

4. A security paper as in claim 1, characterized in that the absorbing substance is a mixture of a dye or pigment with an IR or a UV absorber.

5. A security paper as in any of claims 1 to 4, characterized in that the absorbing substance absorbs at least in those regions of the visible spectrum in which the luminophore emits.

6. A security paper as in any of claims 1 to 4, characterized in that the absorbing substance absorbs essentially in the whole visible spectral range and in the very near IR.

7. A security paper as in any of claims 1 to 6, characterized in that the absorbing substance is optically transparent in those spectral regions in which the luminophore emits outside the visible spectral range.

8. A security paper as in any of claims 1 to 7, characterized in that the luminophore also or only emits in the invisible region of the optical spectrum.

9. A security paper as in any of claims 1 to 8, characterized in that the luminophore also or only emits in the IR region of the optical spectrum.

10. A security paper as in any of claims 1 to 9, characterized in that the luminophore can be excited also or only in the non-visible region of the optical spectrum.

11. A security paper as in any of claims 1 to 10, characterized in that the luminophore has a wide band emission spectrum.

12. A security paper as in any of claims 1 to 11, characterized in that the luminophore is a laser dye.

13. A security paper as in any of claims 1 to 10, characterized in that the luminophore has a narrow band emission spectrum.

14. A security paper as in any of claims 1 to 10 or 11, characterized in that the luminophore is a rare earth metal luminophore.

15. A security paper as in any of claims 1 to 14, characterized in that the luminescent substance is a mixture of the luminophore and the absorbing substance.

16. A security paper as in any of claims 1 to 13, characterized in that the luminescent substance sonsists of a luminophore coated with the absorbing substance.

17. A security paper as in any of claims 1 to 13, characterized in that the luminescent substance consists of a luminophore layer coated with the absorbing substance.

18. A security paper as in any of claims 1 to 17, characterized in that the absorbing substance damps an edge region of the excitation and/or emission spectrum of the luminophore by absorption to negligibly small values.

19. A security paper as in any of claims 1 to 16, characterized in that the absorbing substance damps a narrow region of the excitation and/or emission spectrum of the luminophore by absorption to negligibly small values.

20. A security paper as in any of claims 1 to 16, characterized in that the absorbing substance damps individual excitation and/or emission lines of the luminophore by absorption to negligibly small values.

21. A process for manufacturing a security paper as in any of claims 1 to 20, characterized in that the luminescent substance is already added to the security paper during the preparation of the paper.

22. A process for manufacturing a security paper as in any of claims 1 to 20, characterized in that the luminescent substance is added to a printing ink.

23. A process for manufacturing a security paper as in any of claims 1 to 20, characterized in that the luminescent substance is applied by a coating process.

24. A process for manufacturing a security paper as in any of claims 1 to 20, characterized in that the luminescent substance is added during the production of the paper by means of appropriately prepared mottling fibers.

25. A process for manufacturing a security paper as in any of claims 1 to 20, characterized in that the luminescent substance is added during the production of the paper by means of an appropriately prepared security thread.

26. A testing process for testing the authenticity of a security paper as in any of claims 1 to 25, characterized in that the emission spectrum and/or the excitation spectrum of the luminescent substance is measured split up into several channels, the number and the spectral width of the various channels being selected in such a way that the characteristic portion of the spectrum can be detected with sufficient certainty.

27. A testing process for testing the authenticity of a security paper as in claim 26, characterized in that the emission spectrum and/or the excitation spectrum of the luminescent substance is measured split up into three channels, the central channel directly covering the characteristic portion of the emission spectrum and the two other channels covering the adjacent short and long wave spectral regions, respectively, to a sufficient width.

28. A testing device for carrying out the testing process as in claims 26 and 27, characterized in that it contains in the detector portion or in the illumination portion interference filters (10 or 110) by means of which the emission spectrum or the excitation spectrum is split up into several channels.

**Revendications**

1. Papier valeur avec caractéristiques d'authenticité sous forme de substances luminescentes, se composant d'un luminophore et d'une ou plusieurs substances absorbantes, caractérisé en ce que le spectre d'absorption des substances absorbantes recouvre partiellement, et amortit ainsi, suivant un mode et une manière mesurables caractéristiques, le spectre d'excitation et/ou celui d'émission du luminophore.

2. Papier valeur selon la revendication 1, caractérisé en ce que la matière absorbante est un colorant ou un pigment.

3. Papier valeur selon la revendication 1, caractérisé en ce que la matière absorbante est un agent d'absorption des rayonnements infrarouges ou ultraviolettes.

4. Papier valeur selon la revendication 1, caractérisé en ce que la matière absorbante est un mélange d'un colorant ou d'un pigment avec un agent d'absorbtion des rayonnements infrarouges ou ultraviolettes.

5. Papier valeur selon une des revendications 1 à 4, caractérisé en ce que la matière absorbante au moins absorbe les domaines partiels du spectre visible dans lesquelles le luminophore émet.

6. Papier valeur selon une des revendications 1 à 4, caractérisé en ce que la matière absorbante absorbe pratiquement la totalité du domaine spectral visible et l'infrarouge proche.

7. Papier valeur selon une des revendications 1 à 6, caractérisé en ce que la matière absorbante est optiquement transparente dans les domaines spectraux où le luminophore émet en dehors du domaine spectral visible.

8. Papier valeur selon une des revendications 1 à 7, caractérisé en ce que le luminophore émet également ou seulement dans le domaine invisible du spectre optique.

9. Papier valeur selon une des revendications 1 à 8, caractérisé en ce que le luminophore émet également ou seulement dans le domaine infrarouge du spectre optique.

10. Papier valeur selon une des revendications 1 à 9, caractérisé en ce que le luminophore peut être excité également ou seulement dans le domaine non visible du spectre optique.

11. Papier valeur selon une des revendications 1 à 10, caractérisé en ce que le luminophore a un spectre d'émission à large bande.

12. Papier valeur selon une des revendications 1 à 11, caractérisé en ce que le luminophore est un colorant laser.

13. Papier valeur selon une des revendications 1 à 10, caractérisé en ce que le luminophore a un spectre d'émission à bande étroite.

14. Papier valeur selon une des revendications 1 à 10 ou 11, caractérisé en ce que le luminophore est un luminophore formé de métal de terres rares.

15. Papier valeur selon une des revendications 1 à 14, caractérisé en ce que la substance luminescente est un mélange du luminophore et de la matière absorbante.

16. Papier valeur selon une des revendications 1 à 13, caractérisé en ce que la substance luminescente se compose d'un luminophore enveloppé de la matière absorbante.

17. Papier valeur selon une des revendications 1 à 13, caractérisé en ce que la substance luminescente se compose d'une couche de luminophore que est revêtue de la matière absorbante.

18. Papier valeur selon une des revendications 1 à 17, caractérisé en ce que la matière absorbante amortit un domaine marginal du spectre d'excitation et /ou d'émission du luminophore par absorption jusqu'à des valeurs petites et nègligeables.

19. Papier valeur selon une des revendications 1 à 16, caractérisé en ce que la matière absorbante amortit un domaine étroit du spectre d'excitation et/ou d'émission du luminophore par absorption jusqu'à des valeurs petites et négligeables.

20. Papier valeur selon une des revendications 1 à 16, caractérisé en ce que la matière absorbante amortit différentes raies d'excitation et/ou d'émission du luminophore par absorption jusqu'à des valeurs petites et négligeables.

21. Procédé de fabrication d'un papier valeur selon une des revendications 1 à 20, caractérisé en ce que la substance luminescente est ajoutée au papier valeur déjà lors de la préparation du papier.

22. Procédé de fabrication d'un papier valeur selon une des revendications 1 à 20, caractérisé en ce que la substance luminescente est ajoutée à un colorant.

23. Procédé de fabrication d'un papier valeur selon une des revendications 1 à 20, caractérisé en ce que la substance luminescente est déposée par un processus de revêtement.

24. Procédé de fabrication d'un papier valeur selon une des revendications 1 à 20, caractérisé en ce que la substance luminescente est introduite sous la forme de fibres mélangées préparées en correspondance lors de la fabrication du papier.

25. Procédé de fabrication d'un papier valeur selon une des revendications 1 à 20, caractérisé en ce que la substance luminescente est introduite au moyen d'un fil de sécurité préparé en correspondance lors de la fabrication du papier.

26. Procédé de contrôle pour contrôler l'authenticité d'un papier valeur selon une des revendications 1 à 25, caractérisé en ce que le spectre d'émission et/ou le spectre d'excitation de la substance luminescente est mesuré sous une forme de visée en plusieurs canaux, le nombre et la largeur spectrale des différents canaux étant sélectionnés de manière que la partie caractéristique du spectre puisse être détectée avec une sécurité suffisante.

27. Procédé de contrôle pour contrôler l'authenticité d'un papier valeur selon la revendication 26, caractérisé en ce que le spectre d'émission et/ou le spectre d'excitation de la substance luminescente est mesuré après division en trois canaux, le canal central recouvrant précisément la partie caractéristique du spectre d'émission et les deux autres canaux recouvrant sur une largeur suffisante les domaines spectraux adjacents à ondes courtes ou longues.

28. Dispositif de contrôle pour la mise en oeuvre du procédé de contrôle selon les revendications 26 et 27, caractérisé en ce qu'il contient dans une partie-détection et dans une partie-eclairement des filtres d'interférence (10 ou 110) par lesquels le spectre d'émission ou le spectre d'excitation est divisé en plusieurs canaux.

Fig. 1

Fig. 2

Fig. 3

Fig. 7

Fig. 4

Fig. 5

Fig.6

0 053 124